(19) Europäisches Patentamt
European Patent Office
Office européen des brevets

(11) **EP 0 681 776 B2**

(12) **NEUE EUROPÄISCHE PATENTSCHRIFT**

(45) Veröffentlichungstag und Bekanntmachung des Hinweises auf die Entscheidung über den Einspruch:
**18.01.2006 Patentblatt 2006/03**

(45) Hinweis auf die Patenterteilung:
**05.03.1997 Patentblatt 1997/10**

(21) Anmeldenummer: **93923469.6**

(22) Anmeldetag: **15.10.1993**

(51) Int Cl.:
**H04Q 7/20** (2006.01)

(86) Internationale Anmeldenummer:
**PCT/EP1993/002846**

(87) Internationale Veröffentlichungsnummer:
**WO 1994/017640 (04.08.1994 Gazette 1994/18)**

(54) **VERFAHREN ZUR ZUWEISUNG VON FREQUENZEN ZU BASISSTATIONEN EINES MOBILFUNKNETZES**

PROCESS FOR ALLOCATING FREQUENCIES TO BASE STATIONS OF A MOBILE RADIOTELEPHONE NETWORK

PROCEDE PERMETTANT D'ALLOUER DES FREQUENCES A DES STATIONS DE BASE D'UN RESEAU RADIOTELEPHONIQUE MOBILE

(84) Benannte Vertragsstaaten:
**AT BE CH DE DK ES FR GB GR IE IT LI LU MC NL PT SE**

(30) Priorität: **27.01.1993 DE 4302228**

(43) Veröffentlichungstag der Anmeldung:
**15.11.1995 Patentblatt 1995/46**

(73) Patentinhaber: **T-Mobile Deutschland GmbH 53227 Bonn (DE)**

(72) Erfinder: **PLEHN, Jürgen D-53115 Bonn (DE)**

(74) Vertreter: **Riebling, Peter Patentanwalt Postfach 31 60 88113 Lindau (DE)**

(56) Entgegenhaltungen:
**WO-A-90/10341**

- **GLOBECOM Bd. 2 , Dezember 1985 , NEW ORLEANS Seiten 997 - 1001 HONG ET AL. 'Heuristic Channel Assignments for Cellular Land Mobile Radio Systems'**
- **Frank Box: "A Heuristic Technique for Assigning Frequencies to Mobile Radio Nets" IEEE Transactions on Vehicular Technology, Vol. VT-27, No.2, May 1978, S.57-64**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Zuweisung von Frequenzen zu Basisstationen eines Mobilfunknetzes, wobei von Eingangsinformationen ausgegangen wird, die mindestens die Anzahl der für jeweils eine Basisstation benötigten Frequenzen, die im Mobilfunknetz zulässigen Frequenzen und Informationen zu möglichen Störwirkungen zwischen den Basisstationen im Fall gleicher und/oder benachbarter Frequenzen enthalten.

Bei Mobilfunknetzen sind Basisstationen über das geografische Gebiet verteilt, das von dem Mobilfunknetz erfaßt wird. Die Basisstationen umfassen Sende- und Empfangseinrichtungen, die zu einem Nachrichtenaustausch mit Mobilstationen ausgelegt sind, die sich in dem Versorgungsbereich der jeweiligen Basisstation befinden. Wegen der begrenzten Anzahl von Frequenzen, die für das Mobilfunknetz verwendet werden können, ist eine Belegung verschiedener Basisstationen mit gleichen Frequenzen nicht auszuschließen, wodurch Interferenzen entstehen, wenn eine Mobilstation Signale gleicher Frequenz von mehreren Basisstationen empfängt. Außerdem sind Interferenzen durch eng benachbarte Frequenzen nicht auszuschließen. Außer bei Störungen durch Interferenzen beim Empfang der Signale der Basisstationen in den Mobilstationen (Down-Link) sind auch Interferenzen beim Empfang in den Basisstationen (Up-Link) zu berücksichtigen.

Die Zuweisung von Frequenzen zu den einzelnen Basisstationen hat daher in einer Weise zu erfolgen, daß ein möglichst interferenzfreier Betrieb des Mobilfunknetzes gewährleistet ist. Dazu sind verschiedene Verfahren bekanntgeworden, bei denen Basisstation für Basisstation Frequenzen zugewiesen werden, wobei Frequenzen ausgeschlossen sind, die bereits einer anderen Basisstation zugewiesen sind, wenn die Interferenzwahrscheinlichkeit zwischen der Basisstation und der anderen Basisstation einen vorgegebenen Grenzwert überschreitet.

Bei einem durch WO 90/10341 bekanntgewordenen Verfahren werden für die einzelnen Frequenzen nacheinander jeweils maximale Gruppen von Basisstationen, die noch keine Frequenz erhalten hatten und die alle wegen der Nicht-überschreitung von Mindestanforderungen eine identische Frequenz haben dürften, zusammengestellt. Die Zielrichtung des Verfahrens ist die Benutzung möglichst weniger Frequenzen.

Bei einem weiteren Verfahren (A. Gamst: "A resource allocation technique for FDMA systems" in Alta Frequenza Vol. LVII N. 2), das in einem unter dem Namen GRAND bekanntgewordenen Computerprogramm verwendet wird, werden für die einzelnen Frequenzen nacheinander jeweils maximale Gruppen von noch offenen Frequenzwünschen an Basisstationen gebildet. Hier wird also schon der Fall berücksichtigt, daß eine Basisstation mehr als eine Frequenz benötigt. Bei festgehaltener Frequenz müssen die in der Gruppe gesammelten Frequenzwünsche alle gleichzeitig mit dieser Frequenz befriedigt werden können, d. h. daß bestimmte Mindestanforderungen erfüllt bleiben. Die Zielrichtung des Verfahrens ist auch hier die Benutzung möglichst weniger Frequenzen. Durch eine intelligente Bestimmung einer Mindestanzahl von benötigten Frequenzen erlaubt das Verfahren sogar eine Erfolgskontrolle für das Frequenzanzahlminimierungsziel.

Im Bericht der GLOBECOM'85 (IEEE Global Telecommunication Conference), ist ein Verfahren zur Zuweisung von Kanälen (Frequenzen) zu Zellen (Basisstationen) beschrieben. Die Zuweisung erfolgt durch Auswahl einer Zelle (Basisstation) mittels eines Zellauswahlkriteriums. Der ausgewählten Zelle wird mittels eines Kanalauswahlkriteriums ein geeigneter Kanal zugewiesen. Gelingt mittels dieses Auswahlverfahrens keine eindeutige Auswahl geeigneter Zellen und/oder Kanäle, so erfolgt die Auswahl nach einem Zufallsprinzip oder es erfolgt eine gruppenweise Zuordnung, d.h. ein Kanal wird jeder der ermittelten Zellen zugeordnet.

Die übliche Zielsetzung der bekannten Verfahren, die Minimierung der Anzahl der benutzten Frequenzen, ist in Frage zu stellen. Dem Betreiber eines Mobilfunknetzes ist üblicherweise die Nutzung einer festgelegten Menge von Frequenzen erlaubt. Diese wird er so einsetzen wollen, daß ein möglichst interferenzfreier Betrieb des Mobilfunknetzes gewährleistet ist.

Die bekannten Verfahren leiden darunter, daß die ersten Frequenzen übermäßig häufig und die letzten Frequenzen sehr selten benutzt werden. Ferner werden durch die eingeschränkte Sichtweise bezüglich der Interferenz (Mindestanforderung erfüllt oder nicht) Frequenzpläne erstellt, die den Betrieb des Mobilfunknetzes durch vermeidbare Interferenzen unnötig erschweren.

Aufgabe der vorliegenden Erfindung ist es, ein Verfahren zur Zuweisung von Frequenzen zu Basisstationen eines Mobilfunknetzes anzugeben, welches eine gleichmäßigere Nutzung des zur Verfügung stehenden Spektrums bewirkt.

Die Lösung dieser Aufgabe ergibt sich jeweils aus der Lehre des Patentanspruchs 1 oder 2.

Ein Vorteil des erfindungsgemäßen Verfahrens besteht darin, daß die Frequenzen unter Berücksichtigung der möglichen Störwirkungen zwischen den Basisstationen weitgehend gleichmäßig über das Mobilfunknetz, das heißt über den geografischen Bereich verteilt werden. Zur Beschreibung der Störwirkungen eignen sich vorzugsweise Interferenzwahrscheinlichkeiten. Das erfindungsgemäße Verfahren wendet außer den Interferenzwahrscheinlichkeiten weitere an sich zur Verfügung stehende Informationen optimal aus.

Die Ermittlung der Interterenzwahrscheinlichkeit ist an sich bekannt und beispielsweise in der bereits erwähnten Druckschrift WO 90/10341 beschrieben. Danach ist die Interferenzwahrscheinlichkeit derjenige Flächenanteil am Versorgungsbereich, für den das Nutz-zu-Störsignalverhältnis kleiner als ein vorgegebener Wert ist. Bei weiteren Verfahren zur Ermittlung der Störwahrscheinlichkeit kann der Flächenanteil noch mit der auf den Flächenanteil entfallenden Verkehrsmenge bewertet werden.

Das erfindungsgemäße Verfahren kann in vorteilhafter Weise als Computerprogramm ausgeführt werden und die folgenden Eingangsinformationen verarbeiten:

(1) Angaben über die Wahrscheinlichkeit der Interferenz auf Gleichkanälen, ersten Nachbarkanälen, zweiten Nach-barkanälen usw. (für Up-Link oder Down-Link oder Mix der beiden).
(2) Angabe der prinzipiell im Netz zulässigen Frequenzen.
(3) Folgende Angaben für jede einzelne Basisstation:

(a) Anzahl der benötigten Frequenzen,
(b) lokal gebotene Frequenzen,
(c) lokal verbotene Frequenzen,
(d) ein Schwierigkeitsmaß,
(e) zu tragende Verkehrslast,
(f) Auslastung (Verkehrslast zu Kapazität).

(4) Für den Gleichkanalfall, den Fall des ersten Nachbarkanals usw jeweils eine maximal tolerierbare Interferenzwahrscheinlichkeit und eine darunter liegende Schwelle, ab der Interferenzwahrscheinlichkeiten überhaupt als relevant angesehen werden.
(5) Eine maximale Anzahl von Frequenzzuweisungsdurchläufen.
(6) Systemspezifische (z. B. GSM-spezifische) Zusatzvorgaben wie z. B. Kanalabstände wegen Sendekopplereigenschaften.

Unter (1) und (4) sind bei diesem Programm zumindest die Angaben für einen der Fälle (Gleichkanal, erster Nachbarkanal usw.) notwendig. Ferner sind notwendig: (2), (3)(a) und (5); weggelassen werden können: (3)(b)(c) und (6); mit einem Default-Wert können gesetzt werden: (3)(d) bis (f).

Das Verfahren endet vorzugsweise, wenn in einem Durchlauf der Frequenzbedarf jeder Basisstation unter Einhaltung der Nebenbedingungen erfüllt werden konnte oder wenn die maximale Anzahl von Frequenzzuweisungsdurchläufen durchgeführt worden ist. Im letzteren Falle kann das Ergebnis des Verfahrens unter Umständen nur eine Teillösung sein, aufgrund derer sich der Anwender hinsichtlich seiner Eingangsdaten neu orientieren kann. Ein Zuweisungsdurchlauf besteht aus einer Reihe von Einzelzuweisungen, bei welcher jeweils einer Basisstation eine Frequenz zugewiesen wird.

Das Ergebnis des Verfahrens besteht letztendlich aus einer Liste, in welcher die den Basisstationen jeweils zugeordneten Frequenzen aufgeführt sind. Darüberhinaus kann die Liste weitere Angaben enthalten, wie beispielsweise Interferenzwahrscheinlichkeiten, die nach der Zuweisung der Frequenzen bestehen, oder freie Frequenzen, die bei Bedarf noch vergeben werden können.

Obwohl im Rahmen der Erfindung grundsätzlich auch eine andere Reihenfolge gewählt werden kann, hat sich als vorteilhaft herausgestellt, wenn jeweils zunächst eine Basisstation und danach eine Frequenz für die zuvor ausgewählte Basisstation ausgewählt wird.

Eine Verbesserung des erfindungsgemäßen Verfahrens besteht darin, daß ferner eine Kennzeichnung derjenigen Einzelzuweisungen (Frequenz zu Basisstation) erfolgt, die aufgrund der Auswahl der Basisstation und der Frequenz unter Berücksichtigung der möglichen Störwirkungen, insbesondere von maximal zulässigen Interferenzwahrscheinlichkeiten nicht mehr zulässig sind.

Die Durchführung des erfindungsgemäßen Verfahrens kann an sich bei einem beliebigen Verfahrensstand abgebrochen werden, worauf weitere Zuweisungen durch den jeweils tätigen Planer selbst erfolgen können. Bei einer Weiterbildung des erfindungsgemäßen Verfahrens ist jedoch vorgesehen, daß die Schritte (a) bis (c) wiederholt werden bis allen Basisstationen die erforderliche Anzahl von Frequenzen zugewiesen ist oder bis bei weiterem Bedarf keine Frequenzen mehr zuweisbar sind, und daß im Falle, daß keine Frequenzen mehr zuweisbar sind, die Zuweisung von Frequenzen mit anderen Eingangsinformationen wiederholt wird. Hierdurch ist sichergestellt, daß die Zuweisungen weitgehend optimal durch das erfindungsgemäße Verfahren erfolgen.

Bei dem erfindungsgemäßen Verfahren ist vorzugsweise vorgesehen, daß als erstes Basisstations-Auswahlkriterium die maximale Zahl der dieser Basisstation noch gemeinsam zuweisbaren Frequenzen im Verhältnis zu der Zahl der von der Basisstation noch benötigten Frequenzen dient.

Eine Weiterbildung des erfindungsgemäßen Verfahrens besteht darin, daß die Informationen über mögliche Störwirkungen Interferenzwahrscheinlichkeiten sind und daß als ein Basisstations-Auswahlkriterium die Summe der Interferenzwahrscheinlichkeiten dient, die an der auszuwählenden Basisstation wegen der Benutzung von gleichen und/

oder benachbarten Frequenzen im Verhältnis zu anderen Basisstationen bestehen. Hierdurch erfolgt eine weitere Optimierung der Frequenz-Zuweisung.

Wie bereits oben erwähnt, kann als eine der Eingangsinformationen ein Schwierigkeitsmaß je Basisstation eingegeben werden. Häufig wird jedoch die Schwierigkeit, mit der jeweils einer Station die erforderlichen Frequenzen zugewiesen werden können, erst bei der Zuweisung selbst bekannt - also nach einem oder mehreren Zuweisungsdurchläufen.

Gemäß einer anderen Weiterbildung ist daher vorgesehen, daß die Eingangsinformationen ferner für jede Basisstation ein Schwierigkeitsmaß enthalten, das nach einer Zuweisung, welche nicht alle Frequenzerfordernisse befriedigt, derart geändert wird, daß das Schwierigkeitsmaß derjenigen Basisstationen, welchen nicht die erforderliche Zahl von Frequenzen zugewiesen wurden, deterministisch oder nicht deterministisch heraufgesetzt wird und daß das Schwierigkeitsmaß bei der Auswahl der Basisstation gemäß Schritt (a) berücksichtigt wird.

Eine andere Weiterbildung besteht darin, daß zur Auswahl der Frequenz gemäß Schritt (b) ein Frequenz-Auswahlkriterium aus der Zugehörigkeit der jeweiligen Frequenz in der höchsten der folgenden Klasse besteht:

- in Klasse 1 werden von den an der ausgewählten Basisstation erlaubten Frequenzen diejenigen eingeordnet, deren Zuweisung zur ausgewählten Basisstation für das Verhältnis der maximalen Zahl der dieser Basisstation noch gemeinsam zuweisbaren Frequenzen zu der Zahl der von dieser Basisstation noch benötigten Frequenzen einen Wert unter 1 erzeugen würde,

- in Klasse 2 werden von den restlichen Frequenzen diejenigen eingeordnet, deren Zuweisung zur ausgewählten Basisstation für das Verhältnis der maximalen Zahl der einer anderen Basisstation noch gemeinsam zuweisbaren Frequenzen im Verhältnis zu der Zahl der von dieser anderen Basisstation noch benötigten Frequenzen einen Wert unter 1 erzeugen würde,

- in Klasse 3 werden alle anderen bisher noch nicht eingeordneten, aber im Netz zulässigen Frequenzen eingeordnet;

Eine andere Weiterbildung trägt ebenfalls zu einer insgesamt günstigen Interferenzsituation bei und besteht darin, daß eine durch die bisher erfolgten Zuweisungen erzeugte Interferenzsituation mit Hilfe einer Interferenzpreisfunktion bewertet wird und daß als weiteres Frequenz-Auswahlkriterium diejenige Frequenz ausgewählt wird, deren Zuweisung die geringste Erhöhung der Interferenzpreisfunktion bewirkt.

Diese Weiterbildung behebt einen weiteren Nachteil der bekannten Verfahren, bei welchen aus einer Matrix der Interferenzwahrscheinlichkeiten eine Verträglichkeitsmatrix abgeleitet wird, welche die Wahrscheinlichkeitswerte in strikte Vorgaben im Sinne von "zulässig" oder "nicht zulässig" beinhaltet. Bei der Weiterbildung der Erfindung dagegen werden innerhalb eines vorgegebenen Wertebereichs die ermittelten Interferenzwahrscheinlichkeiten verwendet. Dabei können Werte der Interferenzwahrscheinlichkeiten, die unterhalb des Wertebereiches liegen, vernachlässigt werden. Interferenzwahrscheinlichkeiten oberhalb des Wertebereiches führen zur strikten Vorgabe "nicht zulässig".

Innerhalb des Wertebereiches ist die Zuweisung prinzipiell erlaubt. Es wird aber berücksichtigt, ob aufgrund immer noch hoher Interferenzen die Zuweisung nicht wünschenswert ist. Dies bewirkt unter anderem, daß in der Frequenz-zuweisung jedes geografische Teilgebiet des insgesamt mit Frequenzen zu versorgenden Gebietes so gut versorgt wird, wie dies seine Interferenzsituation zuläßt.

Bei dieser Weiterbildung wird vorzugsweise die Erhöhung der Interferenzpreisfunktion dadurch ermittelt, daß die Eingangsinformationen ferner die Auslastung L und die Verkehrslast V der einzelnen Basisstationen enthalten und daß sich die Erhöhung E der Interferenzpreisfunktion als Summe von Bewertungen von Störwirkungen bei relevanten Interferenzwahrscheinlichkeiten $p_{AB}$ und $p_{BA}$ zwischen der zuvor ausgewählten Basisstation A und anderen Basisstationen B unter Berücksichtigung der Zahl Z der in der jeweiligen Basisstation benötigten Frequenzen wie folgt berechnet:

$$E = \sum_{B} [(p_{AB} \cdot L_A \cdot L_B \cdot V_A)/Z_A + (p_{BA} \cdot L_B \cdot L_A \cdot V_B)/Z_B]$$

Je nach Gegebenheiten im einzelnen können dabei die Interterenzwahrscheinlichkeiten auch die Wahrscheinlichkeiten von Interferenzen durch Nachbarkanäle umfassen.

Bei einer Berechnung der Interferenzpreisfunktion betrachtet man alle Paare A und B von Basisstationen, für die wenigstens eine der beiden Interferenzwahrscheinlichkeiten (im Downlink-Fall: Störung durch A in der Zelle von B, Störung durch B in der Zelle von A; im Uplink-Fall: Störung an A durch B-Mobilstation, Störung an B durch A-Mobilstation) im Gleichkanalfall oder in einem Nachbarschaftskanalfall über einer entsprechenden Relevanzgrenze liegt.

Für ein solches Paar A und B werden die beiden gerichteten Beziehungen "A stört B" und "B stört A" getrennt bewertet. Diese Beziehungen werden relevante Störbeziehungen genannt. Für "B stört A" beispielsweise wird für jede der Basisstation A zugewiesene Frequenz geprüft, ob die gleiche Frequenz oder eine Nachbarfrequenz (1., 2. usw.) in der Basisstation B benutzt wird. Für jeden solchen Fall werden die entsprechenden Interferenzwahrscheinlichkeiten vermerkt. Nach dieser Bearbeitung aller Frequenzen der Basisstation A werden alle so vermerkten Interferenzwahrscheinlichkeiten aufaddiert, mit der Auslastung der Basisstation A, der Auslastung der Basisstation B und der Verkehrslast der Basisstation A multipliziert und abschließend durch die Zahl der der Basisstation B zuzuweisenden Frequenzen dividiert.

Das Ergebnis liefert die Bewertung der Störbeziehung "B stört A". Es kann interpretiert werden als die mit der Bedeutung der Basisstation A für das Gesamtnetz gewichtete durchschnittliche Wahrscheinlichkeit, mit der ein Benutzer der Basisstation A durch den Betrieb der Basisstation B während seiner Nutzungszeit gestört wird. Die Summe der Bewertungen der relevanten Störbeziehungen ist das Ergebnis der Interferenzpreisfunktion.

Eine weitere Verbesserung des erfindungsgemäßen Verfahrens besteht darin, daß als weiteres Frequenz-Auswahlkriterium die Häufigkeit der einzelnen zugewiesenen Frequenzen im Mobilfunknetz berücksichtigt wird.

Um in jedem Fall eine Auswahl beenden zu -können, ist gemäß einer anderen Weiterbildung der Erfindung vorgesehen, daß bei der Auswahl der Basisstation und/oder der Auswahl der Frequenz ein Zufallsverfahren angewendet wird, wenn nach Anwendung aller vorangegangener Auswahlkriterien noch mehrere Basisstationen und/oder Frequenzen zur Auswahl stehen.

Das erfindungsgemäße Verfahrens besteht darin, daß zur Auswahl einer Basisstation gemäß Schritt (a) als erstes Basisstations-Auswahlkriterium das Verhältnis der maximalen Zahl der dieser Basisstation noch gemeinsam zuweisbaren Frequenzen zu der Zahl der von dieser Basisstation noch benötigten Frequenzen angewendet wird, daß die Basisstation mit dem kleinsten Verhältnis ausgewählt wird, daß aus mehreren das kleinste Verhältnis aufweisenden Basisstationen ein den einzelnen Basisstationen zugeordnetes Schwierigkeitsmaß als zweites Auswahlkriterium angewendet wird, wobei die Basisstation mit dem größten Schwierigkeitsmaß ausgewählt wird, daß im Falle keiner eindeutigen Auswahl mit dem zweiten Basisstations-Auswahlkriterium als drittes Basisstations-Auswahlkriterium die Summe von Interterenzwahrscheinlichkeiten, die an der jeweiligen Basisstation wegen der Benutzung von gleichen Frequenzen und/oder Nachbarfrequenzen im Verhältnis zu anderen Basisstationen bestehen, angewendet wird, wobei diejenige Basisstation mit der größten Summe von Interferenzwahrscheinlichkeiten ausgewählt wird, und daß im Falle keiner eindeutigen Auswahl nach der Anwendung des dritten Auswahlkriteriums eine zufällige Auswahl unter den verbleibenden Stationen erfolgt.

Bei einer anderen vorteilhaften Ausführungsform ist vorgesehen, daß zur Auswahl der Frequenz gemäß Schritt (b) ein erstes Frequenz-Auswahlkriterium aus der Zugehörigkeit der jeweiligen Frequenz zu -der höchsten der folgenden Klasse besteht:

- in Klasse 1 werden.von den an der ausgewählten Basisstation erlaubten Frequenzen diejenigen eingeordnet, deren Zuweisung zur ausgewählten Basisstation für das Verhältnis der maximalen Zahl der dieser Basisstation noch gemeinsam zuweisbaren Frequenzen zu der Zahl der von dieser Basisstation noch benötigten Frequenzen an der ausgewählten Basisstation einen Wert unter 1 erzeugen würde,
- in Klasse 2 werden von den restlichen Frequenzen diejenigen eingeordnet, deren Zuweisung zur ausgewählten Basisstation für das Verhältnis der maximalen Zahl der einer anderen Basisstation noch gemeinsam zuweisbaren Frequenzen im Verhältnis zu der Zahl der von dieser anderen Basisstation noch benötigten Frequenzen einen Wert unter 1 erzeugen würde,
- in Klasse 3 werden alle anderen bisher noch nicht eingeordneten, aber im Netz zulässigen Frequenzen eingeordnet;

daß für den Fall keiner eindeutigen Auswahl nach dem ersten Frequenz-Auswahlkriterium als zweites Frequenz-Auswahlkriterium eine mögliche Erhöhung einer Interferenzpreisfunktion berücksichtigt wird, welche aus denjenigen Werten der Interferenzwahrscheinlichkeit zwischen der zuvor ausgewählten Basisstation und anderen Basisstationen berechnet wird, welche nicht über der maximal zulässigen Interferenzwahrscheinlichkeit und nicht unterhalb einer überhaupt als relevant anzusehenden Interferenzwahrscheinlichkeit liegen, daß als drittes Frequenz-Auswahlkriterium die Häufigkeit der bisher erfolgten Zuordnungen der Frequenzen dient, wobei die Frequenz mit der niedrigsten Häufigkeit ausgewählt wird, und daß für den Fall keiner eindeutigen Auswahl nach dem dritten Frequenz-Auswahlkriterium eine zufällige Auswahl unter den verbleibenden Frequenzen erfolgt.

Bei einem weiteren erfindungsgemäßen Verfahren zur Zuweisung von Frequenzen zu Basisstationen eines Mobilfunknetzes, wobei von Eingangsinformationen ausgegangen wird, die mindestens die Anzahl der für jeweils eine Basisstation benötigten Frequenzen, die im Mobilfunknetz zulässigen Frequenzen und die Wahrscheinlichkeiten der Interferenz (Interferenzwahrscheinlichkeiten) zwischen den Basisstationen im Fall gleicher oder benachbarter Frequenzen enthalten, ist vorgesehen, daß schrittweise einzelne Basisstationen und zuzuweisende Frequenzen ausgewählt werden und daß bei der Auswahl der Frequenzen die Interferenzwahrscheinlichkeiten zahlenmäßig berücksichtigt werden.

Die kennzeichnenden Merkmale dieses Verfahrens tragen wesentlich zur Optimierung des Mobilfunknetzes bezüglich der Interferenzwahrscheinlichkeiten bei und können zusammen mit anderen Schritten und Auswahlkriterien für Basisstationen und Frequenzen angewendet werden.

Vorzugsweise werden bei diesem Verfahren nur die Interferenzwahrscheinlichkeiten innerhalb eines Wertebereiches, der zwischen einem als relevant betrachteten Mindestwert und einem als höchstzulässig betrachteten Höchstwert liegt, berücksichtigt.

Ein Ausführungsbeispiel der Erfindung ist in der Zeichnung anhand mehrerer Figuren dargestellt und in der nachfolgenden Beschreibung näher erläutert. Es zeigt:

Fig. 1 in Form einer Matrix als Eingangsgrößen angenommene Interferenzwahrscheinlichkeiten zwischen vier Basisstationen,

Fig. 2 eine grafische Darstellung der Störbeziehungen zwischen den Basisstationen,

Fig. 3.1 bis Fig. 3.8 in Form von Tabellen den Zusammenhang zwischen verschiedenen Frequenzen, den Basisstationen und dem Verhältnis zwischen der Restkapazität und den noch benötigten Frequenzen für jeweils einen Verfahrensschritt.

Der Übersichtlichkeit halber wird von einem sehr kleinen Mobilfunknetz mit vier Basisstationen A, B, C, D ausgegangen, das beispielsweise die Erweiterung eines vorhandenen Netzes darstellt. In der Praxis erfolgen jedoch mit dem erfindungsgemäßen Verfahren Frequenzzuweisungen für Mobilfunknetze mit Hunderten oder sogar Tausenden von Basisstationen. Außerdem sind der Übersichtlichkeit halber nur acht zuzuteilende Frequenzen bei dem Ausführungsbeispiel vorgesehen.

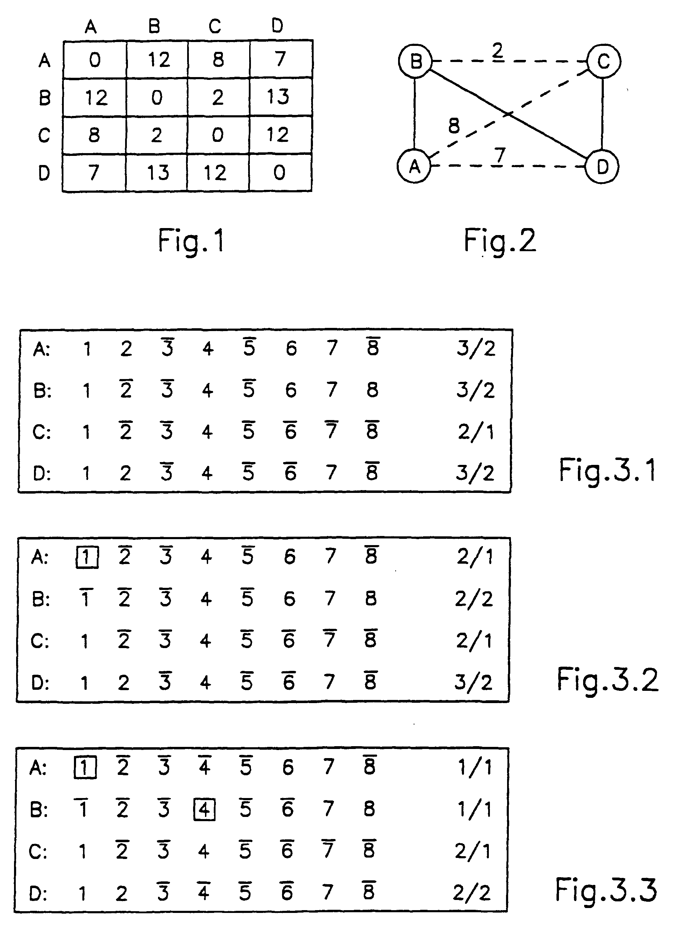

Das Ausführungsbeispiel geht davon aus, daß die in Fig. 1 dargestellten Interferenzwahrscheinlichkeiten zuvor bestimmt wurden. Im sogenannten Down-Link-Fall geben diese die Wahrscheinlichkeit an, daß eine Kommunikation zwischen einer Basisstation und einer in ihrem Bereich befindlichen Mobilstation durch eine andere Basisstation gestört wird. Gemäß Fig. 1 stört beispielsweise die Basisstation D die Basisstation C mit 12% Wahrscheinlichkeit bei der Verwendung einer gleichen Frequenz. Eine Interferenzwahrscheinlichkeit von 10% wird als maximal tolerierbar angesehen, während Interferenzwahrscheinlichkeiten von weniger als 1 % als nicht mehr relevant betrachtet werden.

Die Interferenzwahrscheinlichkeiten zu schon bestehenden Basisstationen des Mobilfunknetzes werden im stark vereinfachten Ausführungsbeispiel nicht explizit aufgeführt. Es wird angenommen, daß sie entweder nicht relevant sind oder zu Verboten einzelner Frequenzen der Basisstationen A, B, C oder D führen. Die durch die Interferenzwahrscheinlichkeit gegebenen Störbeziehungen zwischen den Basisstationen A, B, C, D lassen sich gemäß Fig. 2 auch in grafischer Form darstellen. Dabei bedeutet eine durchgezogene Verbindungslinie ein klares Verbot für die Verwendung gleicher Frequenzen. Eine gestrichelte Linie mit entsprechender Prozentzahl zeigt an, daß die Verwendung gleicher Frequenzen erlaubt, aber nicht gewünscht ist. Sie ist umso unerwünschter, je größer die Interferenzwahrscheinlichkeit ist.

Für die Basisstationen A bis D sei folgendes bekannt:

- A benötigt zwei Frequenzen, darf die Frequenzen 3, 5 und 8 nicht benutzen und hat ein Schwierigkeitsmaß von 22.
- B benötigt zwei Frequenzen, darf die Frequenzen 2, 3 und 5 nicht benutzen und hat ein Schwierigkeitsmaß von 20.
- C benötigt eine Frequenz, darf die Frequenzen 2, 3, 5, 6, 7, 8 nicht benutzen und hat ein Schwierigkeitsmaß von 30.
- D benötigt zwei Frequenzen, darf die Frequenzen 3, 5, 6, 8 nicht benutzen und hat ein Schwierigkeitsmaß von 18.

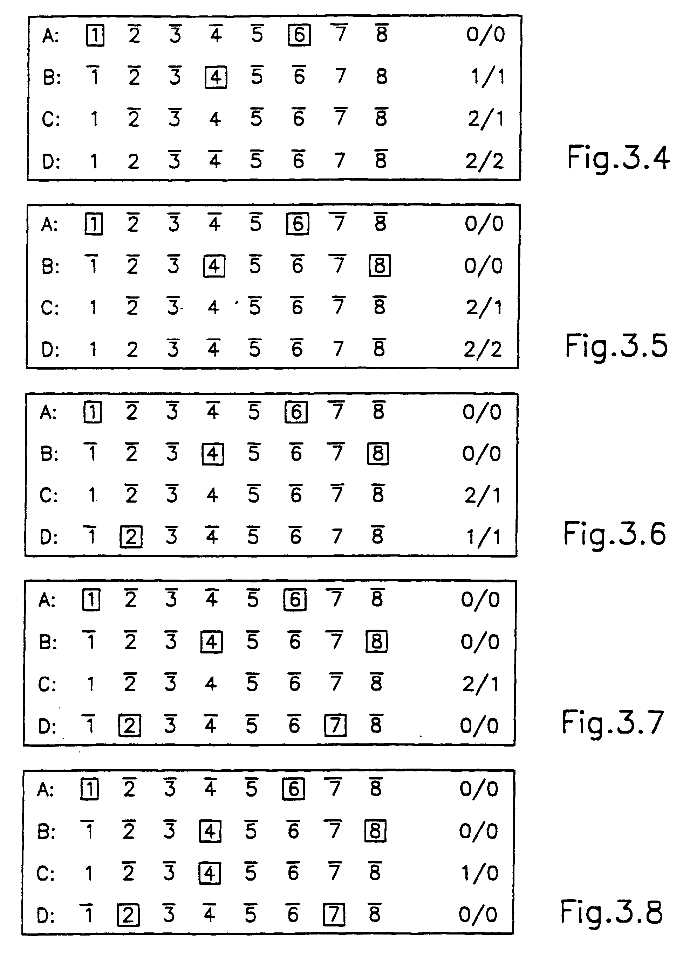

Die Nutzungsmöglichkeiten der Frequenzen sind in Fig. 3.1 tabellarisch dargestellt, wobei ein Balken über einer Zahl bedeutet, daß die entsprechende Frequenz für die jeweilige Basisstation verboten ist.

Für das zu erweiternde Mobilfunknetz sei ferner bekannt, daß im bisher schon existierenden Teil Frequenzen umso häufiger benutzt werden, je größer die Nummer der Frequenz ist. Die Verkehrslast und die Auslastung der einzelnen Basisstationen seien alle mit dem gleichen Dummy-Wert 1 gesetzt. Maximal sollen zehn Frequenzzuweisungsdurchläufe im Verfahren durchgeführt werden.

Zwei an einer Basisstation gemeinsam genutzte Frequenzen müssen aufgrund von Sendekopplereigenschaften einen Kanalabstand von drei haben, so daß beispielsweise die Benutzung der Frequenz 4 automatisch die Benutzung der Frequenzen 2, 3, 5 und 6 an derselben Basisstation verbietet.

Nachdem alle Eingangsdaten bekannt sind, beginnt das erfindungsgemäße Verfahren mit einem ersten Frequenzzuweisungsdurchlauf. Hier ist zunächst eine erste Basisstation auszuwählen. Dazu werden zur Überprüfung des erstrangigen Basisstations-Auswahlkriteriums die Verhältnisse von Restkapazität zur Anzahl der noch benötigten Frequenzen für die Basisstationen A bis D berechnet.

Für die Basisstation A bedeutet dies:

Frequenz 1 ist benutzbar,
Frequenz 2 ist wegen 1 verboten,

Frequenz 3 ist wegen 1 und auch sonst verboten,
Frequenz 4 ist benutzbar,
Frequenz 5 ist wegen 4 aber auch sonst verboten,
Frequenz 6 ist wegen 4 verboten,
Frequenz 7 ist benutzbar,
Frequenz 8 ist wegen 7 verboten.

Daraus folgt eine Restkapazität von 3 und ein Verhältnis zwischen Restkapazität und noch benötigten Frequenzen von 3/2. Dieses Verhältnis sowie die entsprechenden Verhältnisse für die Basisstationen B, C und D sind in Fig. 3.1 rechts angegeben.

Aufgrund des erstrangigen Basisstations-Auswahlkriteriums ist die Frequenzzuweisung mit einer der Basisstationen A, B oder D zu beginnen. Zur Auswahl unter diesen Basisstationen wird ein zweitrangiges Basisstations-Auswahlkriterium, nämlich das Schwierigkeitsmaß herangezogen, so daß die Wahl auf die Basisstation A fällt.

Für die Basisstation A sind die Frequenzen 3, 5 und 8 verboten. Keine der erlaubten Frequenzen (1, 2, 4, 6, 7) würde die Zuweisung der zweiten benötigten Frequenz für die Basisstation A bereits jetzt unmöglich machen, das heißt, die Klasse 1 ist leer. Ebenso ist die Klasse 2 leer. Da die Klasse 3 daher aus mehr als einer Frequenz besteht, wird aus diesen Frequenzen nach dem zweitrangigen Kriterium für die Frequenzauswahl weiter sortiert. Da den Basisstationen C und D noch keine Frequenzen zugewiesen worden sind, muß die Veränderung der Interferenzpreisfunktion für jede Frequenz der Basisstation A null sein. Es ist deshalb eine weitere Auswahl nach dem drittrangigen Frequenz-Auswahlkriterium erforderlich. Nach der Bemerkung über die Nutzungshäufigkeit im schon bestehenden Netz muß die Frequenz 1 ausgewählt werden.

Diese Zuweisung hat zur Folge, daß die Frequenzen 2 und 3 nicht mehr in der Basisstation A benutzt werden dürfen und daß die Frequenz 1 wegen der hohen Interferenzwahrscheinlichkeit (siehe Fig. 1) in der Basisstation B nicht benutzt werden darf. Dieser nach der ersten Einzelzuweisung bestehende Zustand ist in der Tabelle nach Fig. 3.2 dargestellt. Die Einrahmung einer Zahl bedeutet, daß die entsprechende Frequenz zugewiesen worden ist.

Fig. 3.2 zeigt außerdem die nach der ersten Einzelzuweisung erfolgte Neuberechnung der Verhältnisse von Restkapazität zur Anzahl der noch benötigten Frequenzen. Für die zweite Einzelzuweisung wird daher die Basisstation B ausgewählt. Für diese sind die Frequenzen 1, 2, 3 und 5 verboten. Die Wahl der Frequenz 6 würde die Zuweisung einer zweiten Frequenz zur Basisstation B schon jetzt unmöglich machen. Deshalb gehört Frequenz 6 in Klasse 1. Klasse 2 ist leer, während Klasse 3 die Frequenzen 4, 7 und 8 beinhaltet. Da die Basisstation C noch keine Frequenz erhalten hat, muß die Veränderung der Interferenzpreisfunktion für die Frequenz aus Klasse 3 jeweils gleich null sein. Aufgrund des oben erwähnten Häufigkeitskriteriums wird Frequenz 4 ausgewählt und der Basisstation B zugewiesen, was in Fig. 3.3 dargestellt ist. Außerdem zeigt Fig. 3.3 die neuen Verhältnisse zwischen Restkapazität und noch benötigten Frequenzen. Danach kommen für die dritte Einzelzuweisung nach dem erstrangigen Auswahlkriterium die Basisstationen A, B und D in Frage. Nach dem zweitrangigen Basisstations-Auswahlkriterium fällt die Wahl auf die Basisstation A.

Da die Frequenzen 6 und 7 beide in Klasse 3 liegen und wegen noch fehlender Frequenzen in den Basisstationen C und D keine Veränderung der Interferenzpreisfunktion erfolgen kann, wird wiederum nach dem Häufigkeitskriterium die Frequenz 6 ausgewählt. Nach dieser dritten Einzelzuweisung ergibt sich das in Fig. 3.4 dargestellte Zwischenergebnis.

Für die vierte Einzelzuweisung fällt die Wahl nach dem Schwierigkeitsmaß auf die Basisstation B. Die Zuweisung von Frequenz 7 würde bedeuten, daß der Basisstation D nicht mehr zwei Frequenzen zugewiesen werden könnten. Frequenz 7 gehört daher in Klasse 2, während die Frequenz 8 in Klasse 3 gehört und ausgewählt wird. Nach dieser vierten Einzelzuweisung ergibt sich der in Fig. 3.5 dargestellte Zustand.

Für die fünfte Einzelzuweisung fällt die Wahl auf die Basisstation D. Alle für diese Basisstation noch übrig gebliebenen Frequenzen gehören in Klasse 3. Für die Frequenz 1 ergibt sich wegen der Nutzung in Basisstation A eine Erhöhung der Interferenzpreisfunktion, was für die Frequenzen 2 und 7 nicht der Fall ist. Nach dem Häufigkeitskriterium wird aus diesen Frequenzen die Frequenz 2 ausgewählt. Danach ergibt sich der in Fig. 3.6 dargestellte Zustand.

Für die sechste Einzelzuweisung wird wieder die Basisstation D ausgewählt. Nur die Frequenz 7 ist in Klasse 3. Sie wird deshalb der Basisstation 7 zugeteilt, was in Fig. 3.7 dargestellt ist.

Aus Fig. 3.7 ist ferner ersichtlich, daß nur noch der Basisstation C eine Frequenz zuzuteilen ist, wozu zwei Frequenzen frei sind, nämlich die Frequenzen 1 und 4. Für beide Frequenzen erhöht sich die Interferenzpreisfunktion.

Diese Erhöhung wird im Falle einer Zuweisung der Frequenz 1 wie folgt berechnet: Zunächst wird eine Erhöhung der Interferenzpreisfunktion für die Beziehung °C stört A" bei einer Interferenzwahrscheinlichkeit von 8% (Fig. 1) berechnet. Diese Störbeziehung wird mit der Auslastung $L_A$ der Basisstation A, der Auslastung $L_C$ der Basisstation C und der Verkehrslast $V_A$ der Basisstation A multipliziert und durch die Anzahl der insgesamt für die Basisstation A benötigten Frequenzen dividiert. Da sowohl die Auslastung L als auch die Verkehrslast V mit 1 angenommen wurde, ergibt sich

$$(8 \cdot 1 \cdot 1 \cdot 1)/2 = 4$$

In entsprechender Weise wird die Erhöhung der Interferenzpreisfunktion für die Beziehung "A stört C" berechnet, was

$$(8 \cdot 1 \cdot 1 \cdot 1)/1 = 8 \text{ ergibt.}$$

Für alle anderen potentiellen Störbeziehungen ergeben die Berechnungen 0. Die Summe der Bewertungen (Interferenzpreisfunktion) hat sich somit um 12 erhöht. Im Falle einer Zuweisung der Frequenz 4 erhöht sich durch eine ähnliche Berechnung die Interferenzpreisfunktion um drei. Daraus folgt, daß nach dem zweitrangigen Frequenz-Auswahlkriterium die Frequenz 4 auszuwählen ist. Nach dieser siebten Einzelzuweisung ergibt sich der in Fig. 3.8 gezeigte Zustand. Damit ist der erste Zuweisungsdurchlauf beendet. Da es keine Basisstationen mehr mit noch ungesättigtem Frequenzbedarf gibt, endet auch das gesamte Verfahren. Das in Fig. 3.8 dargestellte Endergebnis erfüllt alle Nebenbedingungen und liefert einen Frequenzplan, der einen möglichst interferenzfreien Netzbetrieb gewährleistet.

**Patentansprüche**

1. Verfahren zur Zuweisung von Frequenzen zu Basisstationen eines Mobilfunknetzes wobei von Eingangsinformationen ausgegangen wird, die mindestens die Anzahl der für jeweils eine Basisstation benötigten Frequenzen, die im Mobilfunknetz zulässigen Frequenzen und Informationen zu möglichen Störwirkungen zwischen den Basisstationen im Fall gleicher und/oder benachbarter Frequenzen enthalten,
**dadurch gekennzeichnet, daß** abwechselnd

   a) aus der Menge der Basisstationen des Mobilfunknetzes mittels eines ersten Basisstations-Auswahlkriteriums, welches die maximale Zahl der dieser Basisstation noch gemeinsam zuweisbaren Frequenzen im Verhältnis zu der zahl der von der Basisstation noch benötigten Frequenzen angibt, eine Teilmenge ausgewählt wird,
   aus dieser Teilmenge, falls diese aus mehr als einer Basisstation besteht, eine weitere Teilmenge mittels eines weiteren Basisstations-Auswahlkriteriums ausgewählt wird, und
   der zuletzt genannte Auswahlschritt unter Anwendung jeweils eines weiteren Basisstations-Auswahlkriteriums solange wiederholt wird, bis die Teilmenge nur aus einer Basisstation besteht, wobei
   b) aus der Menge der im Mobilfunknetz zulässigen Frequenzen mittels eines ersten Frequenz-Auswahlkriteriums eine Teilmenge von Frequenzen ausgewählt wird, aus dieser Teilmenge, falls diese mehr als eine Frequenz umfasst, eine weitere Teilmenge mittels eines weiteren Frequenz-Auswahlkriteriums ausgewählt wird, und der zuletzt genannte Auswahlschritt solange unter Anwendung jeweils eines weiteren Frequenz-Auswahlkriteriums wiederholt wird, bis die Teilmenge nur aus einer Frequenz besteht, und
   c) die unter (b) ausgewählte Frequenz der unter (a) ausgewählten Basisstation zugewiesen wird.

2. Verfahren zur Zuweisung von Frequenzen zu Basisstationen eines Mobilfunknetzes, wobei von Eingangsinformationen ausgegangen wird, die mindestens die Anzahl der für jeweils eine Basisstation benötigten Frequenzen, die im Mobilfunknetz zulässigen Frequenzen und Informationen zu möglichen Störwirkungen zwischen den Basisstationen im Fall gleicher und/oder benachbarter Frequenzen enthalten,
**dadurch gekennzeichnet, daß** abwechselnd

   a) aus der Menge der Basisstationen des Mobilfunknetzes mittels eines Basisstations-Auswahlkriteriums eine Teilmenge ausgewählt wird;
   aus dieser Teilmenge, falls diese aus mehr als einer Basisstation besteht, eine weitere Teilmenge mittels eines weiteren Basisstations-Auswahlkriteriums ausgewählt wird, und
   der zuletzt genannte Auswahlschritt unter Anwendung jeweils eines weiteren Basisstations-Auswahlkriteriums solange wiederholt wird, bis die Teilmenge nur aus einer Basisstation besteht, wobei
   b) die Interferenzsituation der unter (a) ausgewählten Basisstation mit Hilfe einer Interferenzpreisfunktion bewertet wird, wobei diejenigen Frequenzen ausgewählt werden, bei denen die durch die Zuweisung bewirkte Erhöhung der Interferenzpreisfunktion minimal ist, wobei sich die Interferenzpreisfunktion berechnet zu: $E = \Sigma [(P_{AB} \cdot L_A \cdot L_B \cdot V_A)/Z_A + (P_{BA} \cdot L_B \cdot L_A \cdot V_B)/Z_B]$, wobei L und V die Auslastung und die Verkehrslast der Basisstationen, Z die Anzahl der benötigten Frequenzen und P die Interferenzwahrscheinlichkeiten zwischen der ausgewählten Basisstation und einer anderen Basisstation angeben,

und

c) die unter (b) ausgewählte Frequenzen der unter (a) ausgewählten Basisstation zugewiesen werden.

3. Verfahren nach Anspruch 1 oder 2, **dadurch gekennzeichnet,**
**daß** jeweils zunächst eine Basisstation und danach eine Frequenz für die zuvor ausgewählte Basisstation ausgewählt wird.

4. Verfahren nach einem der vorhergehenden Ansprüche,
**dadurch gekennzeichnet,**
**daß** ferner eine Kennzeichnung derjenigen Einzelzuweisungen (Frequenz zu Basisstation) erfolgt, die aufgrund der Auswahl der Basisstation und der Frequenz unter Berücksichtigung der möglichen Störwirkungen, insbesondere von maximal zulässigen Interferenzwahrscheinlichkeiten nicht mehr zulässig sind.

5. Verfahren nach einem der vorhergehenden Ansprüche,
**dadurch gekennzeichnet,**
**daß** die Schritte (a) bis (c) wiederholt werden bis allen Basisstationen die erforderliche Anzahl von Frequenzen zugewiesen ist oder bis bei weiterem Bedarf keine Frequenzen mehr zuweisbar sind, und
**daß** im Falle, daß keine Frequenzen mehr zuweisbar sind, die Zuweisung von Frequenzen mit anderen Eingangsinformationen wiederholt wird.

6. Verfahren nach einem der vorhergehenden Ansprüche,
**dadurch gekennzeichnet, daß** die Informationen über mögliche Störwirkungen Interferenzwahrscheinlichkeiten sind und daß als ein Basisstations-Auswahlkriterium die Summe der Interferenzwahrscheinlichkeiten dient, die an der auszuwählenden Basisstation wegen der Benutzung von gleichen und/oder benachbarten Frequenzen im Verhältnis zu anderen Basisstationen bestehen.

7. Verfahren nach einem der vorhergehenden Ansprüche,
**dadurch gekennzeichnet, daß** die Eingangsinformationen ferner für jede Basisstation ein Schwierigkeitsmaß enthalten, das nach einer Zuweisung, welche nicht alle Frequenzerfordernisse befriedigt, derart geändert wird, daß das Schwierigkeitsmaß derjenigen Basisstationen, welchen nicht die erforderliche Zahl von Frequenzen zugewiesen wurden, deterministisch oder nicht deterministisch heraufgesetzt wird und daß das Schwierigkeitsmaß bei der Auswahl der Basisstation gemäß Schritt (a) berücksichtigt wird.

8. Verfahren nach einem der Ansprüche 1 oder 3 - 7,
**dadurch gekennzeichnet, daß** zur Auswahl der Frequenz gemäß Schritt (b) ein Frequenz-Auswahlkriterium aus der Zugehörigkeit der jeweiligen Frequenz zu der höchsten der folgenden Klasse besteht:

- in Klasse 1 werden von den an der ausgewählten Basisstation erlaubten Frequenzen diejenigen eingeordnet, deren Zuweisung zur ausgewählten Basisstation für das Verhältnis der maximalen Zahl der dieser Basisstation noch gemeinsam zuweisbaren Frequenzen zu der Zahl der von dieser Basisstation noch benötigten Frequenzen einen Wert unter 1 erzeugen würde,
- in Klasse 2 werden von den restlichen Frequenzen diejenigen eingeordnet, deren Zuweisung zur ausgewählten Basisstation für das Verhältnis der maximalen Zahl der einer anderen Basisstation noch gemeinsam zuweisbaren Frequenzen im Verhältnis zu der Zahl der von dieser anderen Basisstation noch benötigten Frequenzen einen Wert unter 1 erzeugen würde,
- in Klasse 3 werden alle anderen bisher noch nicht eingeordneten, aber im Netz zulässigen Frequenzen eingeordnet;

9. Verfahren nach einem der Ansprüche 1 oder 3 - 8,
**dadurch gekennzeichnet, daß** eine durch die bisher erfolgten Zuweisungen erzeugte Interferenzsituation mit Hilfe einer Interferenzpreisfunktion bewertet wird und daß als weiteres Frequenz-Auswahlkriterium diejenige Frequenz ausgewählt wird, deren Zuweisung die geringste Erhöhung der Interferenzpreisfunktion bewirkt.

10. Verfahren nach Anspruch 9, **dadurch gekennzeichnet, daß** die Eingangsinformationen ferner die Auslastung L und die Verkehrslast V der einzelnen Basisstationen enthalten und daß sich die Erhöhung E der Interferenzpreisfunktion als Summe von Bewertungen von Störwirkungen bei relevanten Interferenzwahrscheinlichkeiten $p_{AB}$ und $P_{BA}$ zwischen der zuvor ausgewählten Basisstation A und anderen Basisstationen B unter Berücksichtigung der Zahl Z der in der jeweiligen Basisstation benötigten Frequenzen wie folgt berechnet:

$$E = \sum_{B} [(p_{AB} \cdot L_A \cdot L_B \cdot V_A) / Z_A + (p_{BA} \cdot L_B \cdot L_A \cdot V_B) / Z_B]$$

**11.** Verfahren nach Anspruch 10, **dadurch gekennzeichnet,**
**daß** die Interferenzwahrscheinlichkeiten auch die Wahrscheinlichkeiten von Interferenzen durch Nachbarkanäle umfassen.

**12.** Verfahren nach einem der Ansprüche 1 oder 3 - 10,
**dadurch gekennzeichnet, daß** als weiteres Frequenz-Auswahlkriterium die Häufigkeit der einzelnen zugewiesenen Frequenzen im Mobilfunknetz berücksichtigt wird.

**13.** Verfahren nach einem der vorhergehenden Ansprüche,
**dadurch gekennzeichnet, daß** bei der Auswahl der Basisstation und/oder der Auswahl der Frequenz ein Zufallsverfahren angewendet wird, wenn nach Anwendung aller vorangegangener Auswahlkriterien noch mehrere Basisstationen und/oder Frequenzen zur Auswahl stehen.

**14.** Verfahren nach einem der vorhergehenden Ansprüche,
**dadurch gekennzeichnet,**
**daß** zur Auswahl einer Basisstation gemäß Schritt (a) als erstes Basisstations-Auswahlkriterium das Verhältnis der maximalen Zahl der dieser Basisstation noch gemeinsam zuweisbaren Frequenzen zu der Zahl der von dieser Basisstation noch benötigten Frequenzen angewendet wird,
**daß** die Basisstation mit dem kleinsten Verhältnis ausgewählt wird,
**daß** aus mehreren das kleinste Verhältnis aufweisenden Basisstationen ein den einzelnen Basisstationen zugeordnetes Schwierigkeitsmaß als zweites Auswahlkriterium angewendet wird, wobei die Basisstation mit dem größten Schwierigkeitsmaß ausgewählt wird,
**daß** im Falle keiner eindeutigen Auswahl mit dem zweiten Basisstations-Auswahlkriterium als drittes Basisstations-Auswahlkriterium die Summe von Interferenzwahrscheinlichkeiten, die an der jeweiligen Basisstation wegen der Benutzung von gleichen Frequenzen und/oder Nachbarfrequenzen im Verhältnis zu anderen Basisstationen bestehen, angewendet wird, wobei diejenige Basisstation mit der größten Summe von Interferenzwahrscheinlichkeiten ausgewählt wird, und
**daß** im Falle keiner eindeutigen Auswahl nach der Anwendung des dritten Auswahlkriteriums eine zufällige Auswahl unter den verbleibenden Stationen erfolgt.

**15.** Verfahren nach einem der Ansprüche 1 oder 3 - 14,
**dadurch gekennzeichnet, daß** zur Auswahl der Frequenz gemäß Schritt (b) ein erstes Frequenz-Auswahlkriterium aus der Zugehörigkeit der jeweiligen Frequenz zu der höchsten der folgenden Klasse besteht:

- in Klasse 1 werden von den an der ausgewählten Basisstation erlaubten Frequenzen diejenigen eingeordnet, deren Zuweisung zur ausgewählten Basisstation für das Verhältnis dermaximalen Zahl der dieser Basisstation noch gemeinsam zuweisbaren Frequenzen zu der Zahl der von dieser Basisstation noch benötigten Frequenzen an der ausgewählten Basisstation einen Wert unter 1 erzeugen würde,
- in Klasse 2 werden von den restlichen Frequenzen diejenigen eingeordnet, deren Zuweisung zur ausgewählten Basisstation für das Verhältnis der maximalen Zahl der einer anderen Basisstation noch gemeinsam zuweisbaren Frequenzen im Verhältnis zu der Zahl der von dieser anderen Basisstation noch benötigten Frequenzen einen Wert unter 1 erzeugen würde,
- in Klasse 3 werden alle anderen bisher noch nicht eingeordneten, aber im Netz zulässigen Frequenzen eingeordnet;

daß für den Fall keiner eindeutigen Auswahl nach dem ersten Frequenz-Auswahlkriterium als zweites Frequenz-Auswahlkriterium eine mögliche Erhöhung einer Intederenzpreisfunktion berücksichtigt wird, welche aus denjenigen Werten der Interierenzwahrscheinlichkeit zwischen der zuvor ausgewählten Basisstation und anderen Basisstationen berechnet wird, welche nicht über der maximal zulässigen Interferenzwahrscheinlichkeit und nicht unterhalb einer überhaupt als relevant anzusehenden Interferenzwahrscheinlichkeit liegen,
daß als drittes Frequenz-Auswahlkriterium die Häufigkeit der bisher erfolgten Zuordnungen der Frequenzen dient, wobei die Frequenz mit der niedrigsten Häufigkeit ausgewählt wird, und
daß für den Fall keiner eindeutigen Auswahl nach dem dritten Frequenz-Auswahlkriterium eine zufällige Auswahl unter den verbleibenden Frequenzen erfolgt.

16. Verfahren nach einem der vorhergehenden Ansprüche,
**dadurch gekennzeichnet,**
**daß** die Interferenzwahrscheinlichkeiten innerhalb eines Wertebereiches, der zwischen einem als relevant betrachteten Mindestwert und einem als höchstzulässig betrachteten Höchstwert liegt, berücksichtigt werden.

**Claims**

1. A method for the allocation of frequencies to base stations of a mobile radio network, proceeding from input information which contains at least the number of frequencies required for one base station in each case, the frequencies permissible in the mobile radio network and information regarding possible disturbance effects between the base stations in the case of identical and/or adjacent frequencies, **characterised in that** alternately

   a) a partial number of frequencies is selected from a number of base stations of the mobile radio network by means of a first base station selection criterion which denotes the maximum number of frequencies that can still be jointly allocated to this base station in relation to the number of frequencies still required by the base station, from this partial number, in case this consists of more than one base station, a further partial number is selected by means of a further base station selection criterion, and the last mentioned selection step is repeated by using in each case a further base station selection criterion until the partial number consists of only one base station, wherein

   b) from the number of frequencies permitted in the mobile radio network by means of a first frequency selection criterion a partial number of frequencies is selected, from this partial number, in case this consists of more than one frequency, a further partial number is selected by means of a further frequency selection criterion, and the selection step last mentioned is repeated in each case by using a further frequency selection criterion until the partial number consists of only one frequency, and

   c) the frequency selected under b) is allocated to the base station selected under a).

2. A method for the allocation of frequencies to base stations of a mobile radio network, proceeding from input information which contains at least the number of frequencies required for one base station in each case, the frequencies permissible in the mobile radio network and information regarding possible disturbance effects between the base stations in the case of identical and/or adjacent frequencies, **characterised in that** alternately

   a) from the number of base stations of the mobile radio network a partial number of frequencies is selected by means of a base station selection criterion; from this partial number, in case this consists of more than one base station, a further partial number is selected by means of a further base station selection criterion, and the last mentioned selection step is repeated by using in each case a further base station selection criterion until the partial number consists of only one base station, wherein

   b) the interference situation of the base station selected under a) is evaluated by means of an interference cost function, wherein those frequencies are selected in which the increase of the interference cost function, brought about by the allocation, is minimal, wherein the interference cost function is calculated as:
   $E = \Sigma\,[\,(P_{AB}.L_A.L_B.V_A)/Z_A + (P_{BA}.L_B.L_A.V_B)/Z_B]$, wherein L and V denote the loading and the live load of the base stations, Z is the number of required frequencies and P the interference probability between the selected base station and another base station, and

   (c) is the allocation of the frequencies selected under (b) for the base station selected under (a).

3. A method according to Claim 1 or 2, **characterised in that** in each case firstly a base station and thereafter a frequency for the previously selected base station is selected.

4. A method according to one of the preceding claims, **characterised in that** in addition identification of those individual allocations (frequency to base station) takes place which owing to the selection of the base station and the frequency are no longer permissible taking into account the possible disturbance effects, in particular maximum permissible interference probabilities.

5. A method according to one of the preceding claims, **characterised in that** the steps (a) to (c) are repeated until the necessary number of frequencies has been allocated to all base stations or until, in the case of further requirement, no more frequencies can be allocated, and **in that** in the case where no more frequencies can be allocated, the allocation of frequencies is repeated with different input information.

6. A method according to one of the preceding claims, **characterised in that** the information concerning possible disturbance effects are interference probabilities and that serving as a base station selection criterion is the sum of the interference probabilities which exist at the base station to be selected owing to the use of identical and/or adjacent frequencies in relation to other base stations.

7. A method according to one of the preceding claims, **characterised in that** the input information additionally contains for each base station a measurement of difficulty which after an allocation which does not satisfy all the frequency requirements is altered such that the measurement of difficulty of those base stations to which the necessary number of frequencies was not allocated is increased deterministically or non-deterministically and that the measurement of difficulty is taken into account in the selection of the base station according to step (a).

8. A method according to one of Claims 1 or 3-7,
**characterised in that** to select the frequency according to step (b) a frequency selection criterion consists of the membership of the respective frequency of the highest of the following class:

- included in Class 1 are those frequencies from the frequencies permitted at the selected base station, the allocation of which to the selected base station would produce a value below 1 for the relationship of the maximum number of frequencies still able to be allocated jointly to this base station to the number of frequencies still required by this base station,
- included in Class 2 are those frequencies of the remaining frequencies, the allocation of which to the selected base station would produce a value below 1 for the relationship of the maximum number of frequencies still able to be jointly allocated to another base station in relation to the number of frequencies still required by this other base station,
- included in Class 3 are all other hitherto not yet included frequencies, which are, however, permissible in the network.

9. A method according to one of Claims 1 or 3-8, **characterised in that** an interference situation produced by the allocations carried out hitherto is evaluated by means of an interference cost function and that as further frequency selection criterion that frequency is selected, the allocation of which brings about the least increase to the interference cost function.

10. A method according to Claim 9, **characterised in that** the input information additionally contains the loading L and the live load V of the individual base stations and that the increase E of the interference cost function as a sum of evaluations of disturbance effects with relevant interference probabilities $P_{AB}$ and $P_{BA}$ between the previously selected base station A and other base stations B, taking into account the number Z of the frequencies required in the respective base station is calculated as follows:

$$E \ = \ \Sigma \ [ \ (P_{AB}.L_A.L_B.V_A)/Z_A + (P_{BA}.L_B.L_A.V_B)/Z_B],$$

11. A method according to Claim 10, **characterised in that** the interference probabilities also include the probabilities of interferences by adjacent channels.

12. A method according to one of Claims 1 or 3-10, **characterised in that** as further frequency selection criterion the frequency of the individually allocated frequencies in the mobile radio network is taken into account.

13. A method according to one of the preceding claims, **characterised in that** in the selection of the base station and/or the selection of the frequency a random method is applied, if after the application of all the preceding selection criteria further base stations and/or frequencies are still available for selection.

14. A method according to one of the preceding claims, **characterised in that** for the selection of a base station according to step (a) as first base station selection criterion the relationship of the maximum number of the frequencies still able to be jointly allocated to this base station to the number of frequencies still required by this base station is applied,

that the base station with the smallest ratio is selected,

that from several base stations having the smallest ratio, a measurement of difficulty allocated to the individual base stations is applied as second selection criterion, in which the base station with the greatest measurement of difficulty is selected,

that in the case of no clear selection with the second base station selection criterion, as third base station selection criterion the sum of interference probabilities which exist at the respective base station owing to use of identical frequencies and/or adjacent frequencies in relation to other base stations, is applied, in which the base station with the greatest sum of interference probabilities is selected

and that in the case of no clear selection after application of the third selection criterion a random selection takes place amongst the remaining stations.

15. A method according to one of Claims 1 or 3 - 14, **characterised in that** for selection of the frequency according to step (b) a first frequency selection criterion consists of the respective frequency belonging to the highest of the following class:

- included in Class 1 are those of the frequencies permitted at the selected base station, the allocation of which to the selected base station would produce a value below 1 for the relationship of the maximum number of frequencies still able to be allocated jointly to this base station to the number of frequencies still required by this base station at the selected base station,
- included in Class 2 are those of the remaining frequencies, the allocation of which to the selected base station would produce a value below 1 for the relationship of the maximum number of frequencies still able to be jointly allocated to another base station in relation to the number of frequencies still required by this other base station,
- included in Class 3 are all other frequencies not yet included but permissible in the network;

that for the case of no clear selection according to the first frequency selection criterion, as second frequency selection criterion a possible increase to an interference cost function is taken into account, which is calculated from those values of the interference probability between the previously selected base station and other base stations, which do not lie above the maximum permissible interference probability and do not lie below an interference probability which is to be regarded as being at all relevant,

that the rate of occurrence of the allocations of frequencies carried out hitherto serves as third frequency selection criterion, in which the frequency with the lowest rate of occurrence is selected, and

that for the case of no clear selection according to the third frequency selection criterion, a random selection takes place amongst the remaining frequencies.

16. A method according to one of the preceding claims, **characterised in that** the interference probabilities within a range of values which lies between a minimum value regarded as relevant and a maximum value regarded as the maximum permissible are taken into account.

**Revendications**

1. Procédé pour l'attribution de fréquences à des stations de base d'un réseau radiotéléphonique mobile, selon lequel on part d'informations d'entrée qui contiennent au moins le nombre de fréquences nécessaires à une station de base, les fréquences autorisées dans le réseau radiotéléphonique mobile et des informations concernant des perturbations possibles entre les stations de base en cas de fréquences identiques et/ou voisines, **caractérisé en ce que**, alternativement,

(a) on choisit à partir de la quantité de stations de base du réseau mobile une quantité partielle à l'aide d'un premier critère de choix de station de base qui indique le nombre maximal de fréquences aptes à être encore attribuées conjointement à cette station de base, par rapport au nombre de fréquences encore nécessitées par la station de base,

on choisit à partir de cette quantité partielle, au cas où elle se compose de plus d'une station de base, une autre quantité partielle à l'aide d'un autre critère de choix de station de base, et

on répète l'étape de choix mentionnée en dernier, en appliquant à chaque fois un autre critère de choix de station de base, jusqu'à ce que la quantité partielle ne se compose que d'une station de base, étant précisé

(b) qu'à partir de la quantité de fréquences autorisées dans le réseau mobile, on choisit à l'aide d'un premier critère de choix de fréquence une quantité partielle de fréquences, qu'à partir de cette quantité partielle, au cas où elle comprend plus d'une fréquence, on choisit une autre quantité partielle à l'aide d'un autre critère de choix de fréquence, et qu'on répète l'étape de choix mentionnée en dernier, en appliquant à chaque fois un autre critère de choix de fréquence, jusqu'à ce que la quantité partielle ne se compose que d'une fréquence, et

(c) on attribue la fréquence choisie en (b) à la station de base choisie en (a).

2.  Procédé pour l'attribution de fréquences à des stations de base d'un réseau radiotéléphonique mobile, selon lequel on part d'informations d'entrée qui contiennent au moins le nombre de fréquences nécessaires à une station de base, les fréquences autorisées dans le réseau radiotéléphonique mobile et des informations concernant des perturbations possibles entre les stations de base en cas de fréquences identiques et/ou voisines, **caractérisé en ce que**, alternativement,

(a) on choisit à partir de la quantité de stations de base du réseau mobile une quantité partielle à l'aide d'un premier critère de choix de station de base qui indique le nombre maximal de fréquences aptes à être encore attribuées conjointement à cette station de base, par rapport au nombre de fréquences encore nécessitées par la station de base,
on choisit à partir de cette quantité partielle, au cas où elle se compose de plus d'une station de base, une autre quantité partielle à l'aide d'un autre critère de choix de station de base, et
on répète l'étape de choix mentionnée en dernier, en appliquant à chaque fois un autre critère de choix de station de base, jusqu'à ce que la quantité partielle ne se compose que d'une station de base, étant précisé
(b) qu'on évalue la situation d'interférences concernant la station de base choisie en (a) à l'aide d'une fonction de prix d'interférences, qu'on choisit les fréquences avec lesquelles l'augmentation de la fonction de prix d'interférences entraînée par l'attribution est minimale, laquelle fonction de prix d'interférences se calcule de la manière suivante :
$E = \Sigma[(P_{AB} \cdot L_A \cdot L_B \cdot V_A) / Z_A + (P_{BA} \cdot L_B \cdot L_A \cdot V_B)/Z_B]$, L et V indiquant la charge et le volume de trafic des stations de base, Z le nombre de fréquences nécessaires et P les probabilités d'interférence entre la station de base choisie et une autre station de base, et
c) on attribue les fréquences choisies en (b) à la station de base choisie en (a).

3.  Procédé selon la revendication 1 ou 2, **caractérisé en ce qu'**on choisit tout d'abord une station de base, puis une fréquence pour la station de base choisie auparavant.

4.  Procédé selon l'une des revendications précédentes, **caractérisé en ce qu'**il est également prévu une identification des attributions individuelles (fréquence - station de base) qui ne sont plus autorisées en raison du choix de la station de base et de la fréquence, compte tenu des perturbations possibles et en particulier des probabilités d'interférences maximales autorisées.

5.  Procédé selon l'une des revendications précédentes, **caractérisé en ce que** les étapes (a) à (c) sont répétées jusqu'à ce que le nombre nécessaire de fréquences soit attribué à toutes les stations de base ou jusqu'à ce que plus aucune fréquence ne puisse être attribuée en cas de besoins supplémentaires, et **en ce que**, au cas où plus aucune fréquence ne peut être attribuée, l'attribution de fréquences est répétée avec d'autres informations d'entrée.

6.  Procédé selon l'une des revendications précédentes, **caractérisé en ce que** les informations concernant les perturbations possibles sont constituées par des probabilités d'interférences, et **en ce qu'**un élément qui sert de critère de choix de station de base est la somme des probabilités d'interférences qui existent au niveau de la station de base à choisir, en raison de l'utilisation de fréquences identiques et/ou voisines, par rapport à d'autres stations de base.

7.  Procédé selon l'une des revendications précédentes, **caractérisé en ce que** les informations d'entrée contiennent également pour chaque station de base un degré de difficulté qui est modifié après une attribution ne remplissant pas toutes les exigences de fréquence pour que le degré de difficulté des stations de base auxquelles le nombre nécessaire de fréquences a été attribué soit augmenté de manière déterministe ou non déterministe, et **en ce que** le degré de difficulté est pris en compte lors du choix de la station de base selon l'étape (a).

8.  Procédé selon l'une des revendications 1 ou 3 à 7, **caractérisé en ce que** pour le choix de la fréquence selon l'étape (b), il existe un critère de choix de fréquence à partir de l'appartenance de la fréquence à la classe la plus élevée des classes suivantes :

- on range dans la classe 1, parmi les fréquences autorisées au niveau de la station de base choisie, celles dont l'attribution à la station de base choisie produirait une valeur inférieure à 1 pour le rapport du nombre maximal de fréquences encore aptes à être attribuées conjointement à cette station, au nombre de fréquences encore nécessaires à cette station,

- on range dans la classe 2, parmi les fréquences restantes, celles dont l'attribution à la station de base choisie produirait une valeur inférieure à 1 pour le rapport du nombre maximal de fréquences encore aptes à être attribuées conjointement à une autre station de base, au nombre de fréquences encore nécessaires à cette autre station,

- on range dans la classe 3 toutes les autres fréquences pas encore classées jusqu'ici, mais autorisées dans le réseau.

9. Procédé selon l'une des revendications 1 ou 3 à 8, **caractérisé en ce qu'**une situation d'interférences produite par les attributions effectuées jusqu'à présent est évaluée à l'aide d'une fonction de prix d'interférences, et **en ce qu'**on choisit comme autre critère de choix de fréquence la fréquence dont l'attribution entraîne la plus faible augmentation de la fonction de prix d'interférences.

10. Procédé selon la revendication 9, **caractérisé en ce que** les informations d'entrée contiennent également la charge L et le volume de trafic V des différentes stations de base, et **en ce que** l'augmentation E de la fonction de prix d'interférences est calculée de la façon suivante comme la somme d'évaluations de perturbations pour des probabilités d'interférences importantes $p_{AB}$ et $p_{BA}$ entre la station de base A choisie auparavant et d'autres stations de base B, compte tenu du nombre Z de fréquences nécessaires dans la station de base correspondante :

$$E = \sum_{B} [\,(p_{AB} \cdot L_A \cdot L_B \cdot V_A)\,/Z_A + (p_{BA} \cdot L_B \cdot L_A \cdot V_B)\,/Z_B\,]$$

11. Procédé selon la revendication 10, **caractérisé en ce que** les probabilités d'interférences comprennent aussi les probabilités d'interférences dues à des canaux voisins.

12. Procédé selon l'une des revendications 1 ou 3 à 10, **caractérisé en ce qu'**on tient compte, comme autre critère de choix de fréquence, de la répétition des différentes fréquences attribuées, dans le réseau téléphonique mobile.

13. Procédé selon l'une des revendications précédentes, **caractérisé en ce que** lors du choix de la station de base et/ou lors du choix de la fréquence, on utilise un procédé aléatoire si, après l'application de tous les critères de choix précédents, il reste encore plusieurs stations de base et/ou fréquences qui peuvent être choisies.

14. Procédé selon l'une des revendications précédentes, **caractérisé**
**en ce que** pour choisir une station de base selon l'étape (a), on applique comme premier critère de choix de station de base le rapport du nombre maximal de fréquences encore aptes à être attribuées conjointement à cette station de base, au nombre de fréquences encore nécessaires à cette station de base,
**en ce qu'**on choisit la station de base qui présente le rapport le plus faible,
**en ce que** parmi plusieurs stations de base présentant le rapport le plus faible, on applique comme deuxième critère de choix un degré de difficulté associé aux différentes stations de base, étant précisé qu'on choisit la station de base qui présente le degré de difficulté le plus élevé,
**en ce que**, en l'absence de choix clair avec le deuxième critère de choix de station de base, on applique comme troisième critère de choix de station de base la somme des probabilités d'interférences qui existent au niveau de la station correspondante en raison de l'utilisation de fréquences identiques et/ou voisines par rapport à d'autres stations de base, étant précisé qu'on choisit la station de base qui présente la plus grande somme de probabilités d'interférences,
et **en ce que**, en l'absence de choix clair après l'application du troisième critère de choix, un choix aléatoire a lieu parmi les stations restantes.

15. Procédé selon l'une des revendications 1 ou 3 à 14, **caractérisé en ce que** pour le choix de la fréquence selon l'étape (b), il existe un premier critère de choix de fréquence à partir de l'appartenance de la fréquence à la classe la plus élevée des classes suivantes :

- on range dans la classe 1, parmi les fréquences autorisées au niveau de la station de base choisie, celles dont l'attribution à la station de base choisie produirait au niveau de celle-ci une valeur inférieure à 1 pour le rapport du nombre maximal de fréquences encore aptes à être attribuées conjointement à cette station, au nombre de fréquences encore nécessaires à cette station,

- on range dans la classe 2, parmi les fréquences restantes, celles dont l'attribution à la station de base choisie produirait une valeur inférieure à 1 pour le rapport du nombre maximal de fréquences encore aptes à être attribuées conjointement à une autre station de base, au nombre de fréquences encore nécessaires à cette autre station,

- on range dans la classe 3 toutes les autres fréquences pas encore classées jusqu'ici, mais autorisées dans le réseau,

**en ce que**, en l'absence de choix clair selon le premier critère de choix de fréquence, on tient compte comme deuxième critère de choix de fréquence d'une possible augmentation de fonction de prix d'interférences qui est calculée à partir des valeurs de la probabilité d'interférences entre la station de base choisie auparavant et d'autres stations de base qui ne se trouvent pas au-dessus de la probabilité d'interférences maximale autorisée ni au-dessous d'une probabilité d'interférences à considérer comme importante,

**en ce que** l'élément qui sert de troisième critère de choix de fréquence est la répétition des affectations de fréquences effectuées jusqu'à présent, étant précisé qu'on choisit la fréquence qui présente la répétition la plus faible,

et **en ce que**, en l'absence de choix clair selon le troisième critère de choix de fréquence, un choix aléatoire a lieu parmi les fréquences restantes.

16. Procédé selon l'une des revendications précédentes, **caractérisé en ce qu'**on tient compte des probabilités d'interférences à l'intérieur d'une plage de valeurs qui est située entre une valeur minimale considérée comme importante et une valeur maximale considérée comme valeur maximale autorisée.

|   | A | B | C | D |
|---|---|---|---|---|
| A | 0 | 12 | 8 | 7 |
| B | 12 | 0 | 2 | 13 |
| C | 8 | 2 | 0 | 12 |
| D | 7 | 13 | 12 | 0 |

Fig.1

Fig.2

```
A:  1   2   3̄   4   5̄   6   7   8̄      3/2

B:  1   2̄   3̄   4   5̄   6   7   8       3/2

C:  1   2̄   3   4   5̄   6̄   7̄   8̄      2/1

D:  1   2   3̄   4   5̄   6̄   7   8̄      3/2
```

Fig.3.1

```
A:  1̄   2̄   3̄   4   5̄   6   7   8̄      2/1

B:  1̄   2̄   3̄   4   5̄   6   7   8       2/2

C:  1   2̄   3̄   4   5̄   6̄   7̄   8̄      2/1

D:  1   2   3̄   4   5̄   6̄   7   8̄      3/2
```

Fig.3.2

```
A:  1̄   2̄   3̄   4̄   5̄   6   7   8̄      1/1

B:  1̄   2̄   3   4̄   5̄   6̄   7   8       1/1

C:  1   2̄   3̄   4   5̄   6̄   7̄   8̄      2/1

D:  1   2   3̄   4̄   5̄   6̄   7   8̄      2/2
```

Fig.3.3

Fig.3.4

| A: | [1] | 2̄ | 3̄ | 4̄ | 5̄ | [6] | 7̄ | 8̄ | 0/0 |
| B: | 1̄ | 2̄ | 3̄ | [4] | 5̄ | 6̄ | 7 | 8 | 1/1 |
| C: | 1 | 2̄ | 3̄ | 4 | 5̄ | 6̄ | 7̄ | 8̄ | 2/1 |
| D: | 1 | 2 | 3̄ | 4̄ | 5̄ | 6̄ | 7 | 8̄ | 2/2 |

Fig.3.5

| A: | [1] | 2̄ | 3̄ | 4̄ | 5̄ | [6] | 7̄ | 8̄ | 0/0 |
| B: | 1̄ | 2̄ | 3̄ | [4] | 5̄ | 6̄ | 7̄ | [8] | 0/0 |
| C: | 1 | 2̄ | 3̄ | 4 | 5̄ | 6̄ | 7̄ | 8̄ | 2/1 |
| D: | 1 | 2 | 3̄ | 4̄ | 5̄ | 6̄ | 7 | 8̄ | 2/2 |

Fig.3.6

| A: | [1] | 2̄ | 3̄ | 4̄ | 5̄ | [6] | 7̄ | 8̄ | 0/0 |
| B: | 1̄ | 2̄ | 3̄ | [4] | 5̄ | 6̄ | 7̄ | [8] | 0/0 |
| C: | 1 | 2̄ | 3̄ | 4 | 5̄ | 6̄ | 7̄ | 8̄ | 2/1 |
| D: | 1̄ | [2] | 3̄ | 4̄ | 5̄ | 6̄ | 7 | 8̄ | 1/1 |

Fig.3.7

| A: | [1] | 2̄ | 3̄ | 4̄ | 5̄ | [6] | 7̄ | 8̄ | 0/0 |
| B: | 1̄ | 2̄ | 3̄ | [4] | 5̄ | 6̄ | 7̄ | [8] | 0/0 |
| C: | 1 | 2̄ | 3̄ | 4 | 5̄ | 6̄ | 7̄ | 8̄ | 2/1 |
| D: | 1̄ | [2] | 3̄ | 4̄ | 5̄ | 6̄ | [7] | 8̄ | 0/0 |

Fig.3.8

| A: | [1] | 2̄ | 3̄ | 4̄ | 5̄ | [6] | 7̄ | 8̄ | 0/0 |
| B: | 1̄ | 2̄ | 3̄ | [4] | 5̄ | 6̄ | 7̄ | [8] | 0/0 |
| C: | 1 | 2̄ | 3̄ | [4] | 5̄ | 6̄ | 7̄ | 8̄ | 1/0 |
| D: | 1̄ | [2] | 3̄ | 4̄ | 5̄ | 6̄ | [7] | 8̄ | 0/0 |